# EUROPÄISCHE PATENTANMELDUNG

(11) **EP 3 309 413 A1**
(43) Veröffentlichungstag der Anmeldung: **18.04.2018**
(21) Anmeldenummer: 16194159.6
(22) Anmeldetag: 17.10.2016
(51) Int. Cl.: F16B 25/00

(54) **BEFESTIGUNGSELEMENT**

(71) Anmelder: Bossard AG, 6301 Zug (CH)
(72) Erfinder: Pfister, Werner, 5608 Stetten (CH)
(74) Vertreter: Toleti, Martin

(57) **Zusammenfassung**

Befestigungselement (100) für ein poröses Material, insbesondere Balsaholz, enthaltend einen Befestigungskopf (1) ausgebildet zur Aufnahme eines Drehmoments in beide Rotationsrichtungen um eine Hauptachse (10) und einen Schaft (2), welcher sich vom Befestigungskopf (1) aus erstreckt und am vom Befestigungskopf abgewandten Ende in einer Spitze (3) endet. Der Schaft (2) weist über mindestens einen Teil seiner Erstreckung in Richtung der Hauptachse (10) ein Aussengewinde (4) zum Eindrehen des Befestigungselements (100) in das Material auf.

## Beschreibung

### Gebiet der Erfindung

Die vorliegende Erfindung betrifft ein Befestigungselement für ein poröses Material und eine Verwendung des Befestigungselements.

### Hintergrund

Bei der Verwendung eines Befestigungselements in einem porösen Material oder einem weichen Holz muss berücksichtigt werden, dass diese Materialen im Innern Hohlräume aufweisen und sich daher in der Umgebung des Aussengewindes des Befestigungselements nur wenig tragfähiges Material befindet, so dass die Tragbarkeit des Materials beschränkt ist.

Werden aus dem Stand der Technik bekannte Befestigungsmittel, insbesondere Schrauben, für ein poröses Material verwendet, führt dies oft dazu, dass die Schraube wegen der geringen Tragbarkeit und der damit verringerten Kraftaufnahme des Materials aus dem Material ausreisst.

### Darstellung der Erfindung

Hinsichtlich des bekannten Stands der Technik stellt sich also die Aufgabe, ein Befestigungselement bereitzustellen, welches sich für die Verwendung in porösen Materialien sowie in weichen Hölzern eignet und beim Einschrauben in diese Materialien eine sichere Verbindung gewährleistet.

Diese Aufgabe wird durch ein Befestigungselement gemäss Anspruch 1 gelöst.

Dementsprechend enthält das erfindungsgemässe Befestigungselement einen Befestigungskopf, welcher zur Aufnahme eines Drehmoments in beide Rotationsrichtungen, also im Uhrzeigersinn und im Gegenuhrzeigersinn, um eine Hauptachse ausgebildet ist. Ausserdem enthält das Befestigungselement einen Schaft, welcher sich vom Befestigungskopf aus entlang der Hauptachse erstreckt und am vom Befestigungskopf abgewandten Ende in einer Spitze endet. Der Schaft enthält über mindestens einen Teil seiner Erstreckung in Richtung der Hauptachse ein Aussengewinde zum Eindrehen des Befestigungselements in ein poröses Material, welches insbesondere ein Balsaholz ist.

Ein Aussendurchmesser D des Aussengewindes, insbesondere der grösste Aussendurchmesser D des Aussengewindes, ist im Verhältnis zum Kerndurchmesser d des Aussengewindes über mindestens einen Teil der Erstreckung des Aussengewindes in Richtung der Hauptachse in einem Verhältnis von D/d > 2.5 ausgebildet, es kann aber, insbesondere für Balsaholz, auch D/d > 2.8 sein. Vorzugsweise ist das Verhältnis 3 > D/d > 2.5.

Der Aussendurchmesser bezeichnet den äusseren Durchmesser des Gewindes im Querschnitt, an der Gewindespitze gemessen. Der Kerndurchmesser bezeichnet den Durchmesser des Gewindes im Querschnitt auf dem Gewindegrund gemessen.

Vorzugsweise beträgt der Aussendurchmesser des Aussengewindes zwischen 4 mm und 5 mm und/oder der Kerndurchmesser des Aussengewindes zwischen 1 mm und 2mm.

Vorzugsweise ist der Kerndurchmesser d des Aussengewindes über die gesamte Länge des Aussengewindes gleich gross.

Das Aussengewinde weist eine zum Befestigungskopf hin ausgerichtete erste Gewindeflanke und eine vom Befestigungskopf weg gerichtete zweite Gewindeflanke auf.

Das Gewindeprofil der zweiten Gewindeflanke hat einen Knick. Dadurch ergeben sich ein erster Abschnitt der zweiten Gewindeflanke zwischen Knick und Gewindegrund und ein zweiter Abschnitt der zweiten Gewindeflanke zwischen Knick und Gewindespitze.

Ein erster Winkel zwischen der ersten Gewindeflanke und dem ersten Abschnitt der zweiten Gewindeflanke ist grösser als ein zweiter Winkel zwischen der ersten Gewindeflanke und dem zweiten Gewindeabschnitt der zweiten Gewindeflanke.

In einer weiteren bevorzugten Ausführungsform des Befestigungselements sind die erste Gewindeflanke und die zweite Gewindeflanke so ausgebildet, dass der erste Winkel zwischen 45° und 65° beträgt und vorzugsweise zwischen 55° und 60°. Der zweite Winkel kann zwischen 20° und 40° betragen und vorzugsweise zwischen 30° und 35°.

Vorzugsweise ist das Aussengewinde des erfindungsgemässen Befestigungselements als ein selbstfurchendes Gewinde ausgebildet, so dass sich das Befestigungselement beim Eindrehen ein Gewinde in das Material formt.

Das Gewinde ist vorzugsweise als eingängiges Gewinde mit einem Gewindegang ausgebildet, es kann aber auch als mehrgängiges Gewinde mit mehreren Gewindegängen ausgebildet sein.

In einer bevorzugten Ausführungsform des Befestigungselements erstreckt sich der Abschnitt des Schafts, welcher das Aussengewinde enthält bis zur Spitze des Befestigungselements. Das heisst, das Aussengewinde ist bis zur Spitze des Elements ausgebildet und bildet in der Nähe der Spitze den Gewindeauslauf des Aussengewindes. Vorzugsweise verringert sich in einem Bereich des Schafts nahe der Spitze der Aussendurchmesser des Aussengewindes. Insbesondere ist der Aussendurchmesser des Gewindeauslaufs des Aussengewindes nahe der Spitze mehr als 20%, insbesondere mehr als 50% kleiner als der maximale Aussendurchmesser des Gewindes.

Die Gewindesteigung des Aussengewindes ist vorzugsweise zwischen 1.5 mm und 2 mm.

Bei einem bevorzugten Befestigungselement beträgt eine Länge des Schafts von einem dem Befestigungskopf zugewandten Ende bis zur Spitze des Befestigungselements zwischen 10 mm und 25 mm.

Ausserdem enthält das Befestigungselement vorzugsweise Stahl, Aluminium oder faserverstärkten Kunststoff. Insbesondere ist es einteilig aus einem dieser Materialien ausgebildet. Das Element kann in einer anderen Ausführungsform auch eine Kombination der erwähnten Materialen enthalten, zum Beispiel kann der Befestigungskopf aus einem anderen Material sein als der Schaft oder als der Abschnitts des Schafts, welcher das Gewinde aufweist.

In einer weiteren Ausführungsform des Befestigungselements kann sich das Aussengewinde über den ganzen Schaft von der Spitze bis zum Befestigungskopf erstrecken. Vorzugsweise erstreckt sich das Aussengewinde nur über einen Teil, beziehungsweise über einen Abschnitt des Schafts, so dass sich zwischen dem Befestigungskopf und dem Abschnitt des Schafts, welcher als Aussengewinde ausgebildet ist, ein gewindeloser Abschnitt ergibt.

Insbesondere kann ein Durchmesser des gewindelosen Abschnitts in etwa gleich dem grössten Aussendurchmesser des Aussengewindes sein.

Ausserdem kann ein Durchmesser des gewindelosen Abschnitts kleiner sein als ein Durchmesser des Befestigungskopfs, insbesondere 20%, 30% oder 40% kleiner.

Der Befestigungskopf des Elements ist so ausgebildet, dass ein Drehmoment darauf einwirken kann, zum Rotieren des Elements in beide Rotationsrichtungen um die Hauptachse. Insbesondere hat der Befestigungskopf dazu eine Aufnahme die so ausgebildet ist, dass sie mit einem zur Aufnahme passenden Werkzeug kontaktiert werden kann, zum Anlegen des Drehmoments. Die Aufnahme kann als Sechskant, Schlitz oder vorzugsweise als Innensechsrund ausgebildet sein.

Der Befestigungskopf kann als Linsenkopf oder Senkkopf ausgebildet sein.

Vorzugsweise ist der Befestigungskopf ausserdem so ausgebildet, dass ein Durchmesser des Kopfs grösser ist als ein Aussendurchmesser des Aussengewindes, insbesondere grösser als der grösste Aussendurchmesser des Aussengewindes. Vorzugsweise ist ein Durchmesser des Befestigungskopfs mehr als 20% grösser als der grösste Aussendurchmesser des Aussengewindes.

Vorzugsweise ist das Befestigungselement eine Schraube und insbesondere eine Holzschraube.

Eine erfindungsgemässe Verwendung des erfindungsgemässen Befestigungselements ist das Eindrehen desselben in das poröse Material.

Vorzugsweise ist das Material ein Balsaholz, geschäumter Kunststoff oder Aluminiumschaum.

Ein weiteres bevorzugtes Material ist ein Material mit einer Dichte p von weniger als 1g/cm³ (ρ < 1g/cm³)_{.}

Beim Einschrauben des erfindungsgemässen Befestigungselements wird das poröse Material in der Umgebung des Aussengewindes komprimiert, so dass das Material in der Umgebung des Aussengewindes tragbarer wird und das Befestigungselement kraftschlüssig im Material befestigt ist.

Um eine gegenüber dem Stand der Technik sicherere Verbindung zu erwirken, ist insbesondere die erfindungsgemässe Zusammenwirkung des Durchmesserverhältnisses zwischen Kerndurchmesser d und Aussendurchmesser D des Aussengewindes und dem Gewindeprofil des Aussengewindes ausschlaggebend.

Beim Einschrauben in das Material bildet das Aussengewinde ein Gewinde im Material, vorzugsweise durch Umformen, Verdichten oder Einschneiden des Materials.

Durch das Durchmesserverhältnis von D/d > 2.5 bildet das Aussengewinde eine grosse Gewindetiefe, so dass beim Einschrauben des Befestigungselements in ein poröses Material ein grosses Volumen an Material komprimiert wird, was wiederum zu einer hohen Kraftaufnahme des Materials führt, so dass das Befestigungselement höher belastet werden kann als wenn ein kleineres Materialvolumen komprimiert wird.

Um das Einschrauben des erfindungsgemässen Befestigungselements mit dem Durchmesserverhältnis D/d > 2.5 in ein Material zu erleichtern, hat das Aussengewinde das erfindungsgemässe Gewindeprofil mit einer ersten Gewindeflanke und einer zweiten Gewindeflanke mit einem Knick, welcher die zweite Gewindeflanke in den ersten und den zweiten Abschnitt unterteilt. Die erfindungsgemässe Ausgestaltung der Gewindeflanken, insbesondere der beiden Abschnitte der zweiten Gewindeflanke führt dazu, dass beim Einschrauben des Befestigungsmittels das Material in der Umgebung des Aussengewindes und insbesondere in der Umgebung des Gewindegrunds des Aussengewindes verdichtet wird, zum Erleichtern des Einschraubens des Befestigungselements.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Vorderansicht des Befestigungsmittels gemäss einer Ausführungsform der Erfindung;
Fig. 2 eine Seitenansicht des Befestigungsmittels aus Fig. 1 gemäss einer Ausführungsform der Erfindung; und
Fig. 3 einen Querschnitt einer Detailansicht des Ausschnitts A aus Fig. 1 gemäss einer Ausführungsform der Erfindung.

### Weg(e) zur Ausführung der Erfindung

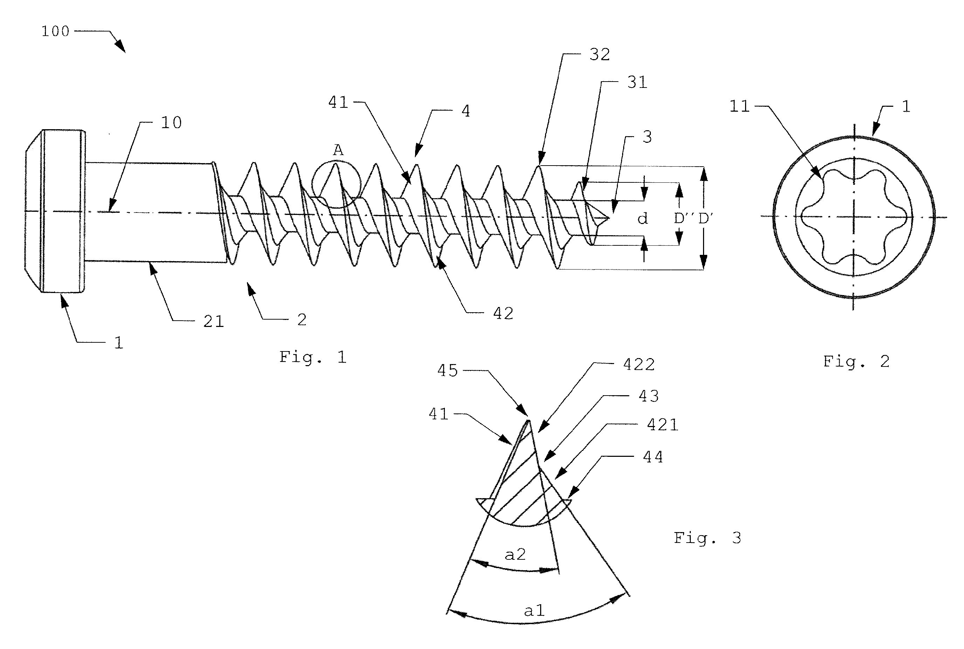

Fig. 1 zeigt eine Ausführungsform des erfindungsgemässen Befestigungselements 100 mit einem Befestigungskopf 1 und einem Schaft 2, welcher sich vom Befestigungskopf 1 aus in Richtung einer Hauptachse 10 erstreckt und am vom Befestigungskopf 1 abgewandten Ende in einer Spitze 3 endet.

Eine Länge des Schafts 2 von einem Ende des Schafts 2, dass sich aus dem Befestigungskopf 2 erstreckt bis zur Spitze 3 beträgt vorzugsweise ca. 22 mm oder ca. 25 mm.

Der Schaft 2 weist über einen Teil seiner Erstreckung in Richtung der Hauptachse 10 ein Aussengewinde 4 auf. Das Aussengewinde 4 ist in der abgebildeten Ausführungsform ein rechtssteigendes Gewinde, das heisst, dass bei Aufsicht auf das Gewinde die Gewindegänge nach rechts ansteigen und das Befestigungselement daher im Uhrzeigersinn in ein Material eingedreht wird. Das Aussengewinde 4 kann aber in einer anderen Ausführungsform auch ein linksteigendes Gewinde sein, welches im Gegenuhrzeigersinn in ein Material eingedreht wird.

Ein Durchmesser D des Aussengewindes, insbesondere der grösste Durchmesser D' des Aussengewindes 4, auch Nenndurchmesser genannt, ist im Verhältnis zum Kerndurchmesser d des Gewindes 4 über mindestens einen Teil der Erstreckung des Gewindes 4 entlang des Schafts 2 in Richtung der Hauptachse 10 in einem Verhältnis von D/d > 2.5 oder D/d > 2.8 oder 3 > D/d > 2.5. ausgebildet.

Der grösste Aussendurchmesser D' des Gewindes ist vorzugsweise ca. 4.2 mm. Der Kerndurchmesser d des Gewindes ist vorzugsweise ca. 1.5 mm.

Das Aussengewinde 4 weist eine zum Befestigungskopf 1 hin ausgerichtete erste Gewindeflanke 41 und einem vom Befestigungskopf 1 weg gerichtete zweite Gewindeflanke 42, welche in Richtung der Spitze 3 ausgerichtet ist, auf.

Der Abschnitt des Schafts 2, welcher als Aussengewinde 4 ausgebildet ist, erstreckt sich bis zur Spitze 3. Zur Spitze hin nimmt der Aussendurchmesser D des Aussengewindes 4 ab und ist kleiner als der grösste Aussendurchmesser D' des Aussengewindes. Der Aussendurchmesser D" des letzten Gewindegangs 31 des Aussengewindes 4 vor der Spitze 3 kann ca. 50% kleiner sein als der grösste Aussendurchmesser D' des Gewindes 4.

Ausserdem kann ein Abstand, der sogenannte Gewindeauslauf, zwischen der Spitze 3 und demjenigen Gewindegang 32 des Aussengewindes 4, welcher am nächsten zur Spitzte 3 angeordnet ist und einen Aussendurchmesser D hat, der dem grössten Aussendurchmesser D' des Gewindes 4 entspricht, etwa 3 mm betragen.

Der Kerndurchmesser d ist über die ganze Erstreckung des Aussengewindes 4 immer gleich gross.

Zwischen dem Befestigungskopf 1 und dem Aussengewinde 4 erstreckt sich in Richtung der Hauptachse 10 ein gewindeloser Abschnitt 21 des Schafts 2.

Dieser gewindelose Abschnitt 21 kann insbesondere eine Länge von ca. 6 mm haben. Insbesondere kann ein Durchmesser des gewindelosen Abschnitts 21 in etwa dem grössten Aussendurchmesser D' des Aussengewindes 4 entsprechen. Ein Durchmesser des gewindelosen Abschnitts 21 kann aber in einer anderen Ausführungsform auch kleiner als der grösste Aussendurchmesser D' des Aussengewindes 4 sein.

Insbesondere ist ein Durchmesser des gewindelosen Abschnitts 21 des Schafts 2 kleiner als ein Durchmesser des Befestigungskopfs 1.

Das Befestigungselement kann in beide Richtungen um die Hauptachse rotiert werden. Für die in Fig. 1 abgebildete Ausführungsform der Schraube, welche ein rechtssteigendes Gewinde hat, wird das Element durch Rotation im Uhrzeigersinn in ein Material eingeschraubt, wobei eine Rotation im Gegenuhrzeigersinn das Lösen der Schraube aus dem Material ermöglicht.

Fig. 2 zeigt eine Seitenansicht des Befestigungselements 100 aus Fig. 1. Dabei ist der Befestigungskopf 1 abgebildet, wobei die Hauptachse 10 in die Zeichenebene hinein gerichtet ist.

Der Befestigungskopf ist dazu ausgebildet, dass ein Drehmoment bzw. eine Drehkraft angelegt werden kann, damit das Befestigungselement um die Hauptachse rotiert werden kann. Dazu enthält der Befestigungskopf eine Aufnahme für ein Werkzeug, mit welchem das Drehmoment angelegt werden kann. Insbesondere ist diese Aufnahme als Innensechsrund 11 ausgebildet wie in Fig. 2 gezeigt.

Fig. 3 zeigt den Querschnitt des Aussengewindes 4 in Ausschnitt A aus Fig. 1. Das Gewindeprofil der zweiten Gewindeflanke 42 hat einen Knick 43, welcher die zweite Gewindeflanke 42 in einen ersten Abschnitt 421 zwischen Gewindegrund 44 und Knick 43 und einen zweiten Abschnitt 422 zwischen Knick 43 und Gewindespitze 45 unterteilt. Ein erster Winkel a1 zwischen der ersten Gewindeflanke 41 und dem ersten Abschnitt 421 der zweiten Gewindeflanke 42 ist grösser als ein zweiter Winkel a2 zwischen der ersten Gewindeflanke 41 und dem zweiten Abschnitt 422 der zweiten Gewindeflanke 42. Der erste Winkel a1 ist vorzugsweise ca. 40%, 50% oder 60% grösser als der zweite Winkel a2. Insbesondere ist der erste Winkel a1 ca. 60° und der zweite Winkel a2 ca. 30°.

Der in Fig. 3 gezeigte Querschnitt des Aussengewindes 4 ist vorzugsweise über die ganze Erstreckung der nutzbaren Gewindelänge des Aussengewindes ausgebildet. In den Gewindeausläufen des Aussengewindes 4 nahe der Spitze 3 und nahe des Befestigungskopfs 1 kann sich der Querschnitt und insbesondere das Gewindeprofil von demjenigen in Fig. 3 unterscheiden.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der folgenden Ansprüche ausgeführt werden kann.

## Patentansprüche

1. Befestigungselement (100) für ein poröses Material, insbesondere Balsaholz, enthaltend
einen Befestigungskopf (1) ausgebildet zur Aufnahme eines Drehmoments in beide Rotationsrichtungen um eine Hauptachse (10),
einen Schaft (2), welcher sich vom Befestigungskopf (1) aus erstreckt und am vom Befestigungskopf abgewandten Ende in einer Spitze (3) endet,
wobei der Schaft (2) über mindestens einen Teil seiner Erstreckung in Richtung der Hauptachse ein Aussengewinde (4) zum Eindrehen des Befestigungselements (100) in das Material aufweist,
wobei ein Aussendurchmesser (D) des Aussengewindes (4) im Verhältnis zum Kerndurchmesser (d) des Aussengewindes (4) über mindestens einen Teil seiner Erstreckung in Richtung der Hauptachse (10) in einem Verhältnis von D/d > 2.5 ausgebildet ist,
wobei das Aussengewinde (4) eine zum Befestigungskopf hin ausgerichtete erste Gewindeflanke (41) und eine vom Befestigungskopf weg gerichtete zweite Gewindeflanke (42) aufweist,
wobei das Gewindeprofil der zweiten Gewindeflanke (42) einen Knick (43) hat, so dass ein erster Winkel (a1) zwischen der ersten Gewindeflanke (41) und einem ersten Abschnitt (421) der zweiten Gewindeflanke (42) zwischen Knick (43) und Gewindegrund (44) grösser ist als ein zweiter Winkel (a2) zwischen der ersten Gewindeflanke (41) und einem zweiten Abschnitt (422) der zweiten Gewindeflanke (42) zwischen Knick (43) und Gewindespitze (45).

2. Befestigungselement (100) nach Anspruch 1, wobei das Aussengewinde (4) ein selbstfurchendes Gewinde ist, zur Umformung des Materials beim Eindrehen des Befestigungselements (100) ins Material.

3. Befestigungselement (100) nach einem der vorhergehenden Ansprüche, wobei sich das Aussengewinde (4) bis zur Spitze (45) hin erstreckt und wobei insbesondere der Aussendurchmesser (D) des Aussengewindes (4) zur Spitze (45) hin abnimmt.

4. Befestigungselement (100) nach einem der vorhergehenden Ansprüche, wobei der Kerndurchmesser (d) des Aussengewindes (4) über die gesamte Länge des Aussengewindes (4) gleich gross ist.

5. Befestigungselement (100) nach einem der vorhergehenden Ansprüche,
wobei der erste Winkel (a1) zwischen 45° und 65° beträgt, insbesondere zwischen 55° und 60° und/oder
wobei der zweite Winkel (a2) zwischen 20° und 40° beträgt, insbesondere zwischen 30° und 35°.

6. Befestigungselement (100) nach einem der vorhergehenden Ansprüche, mit D/d > 2.8.

7. Befestigungselement (100) nach einem der vorhergehenden Ansprüche
wobei der Aussendurchmesser (D) des Aussengewindes (4) zwischen 4 mm und 5 mm beträgt und/oder
wobei der Kerndurchmesser (d) des Aussengewindes (4) zwischen 1 mm und 2 mm beträgt.

8. Befestigungselement (100) nach einem der vorhergehenden Ansprüche wobei die Gewindesteigung zwischen 1.5 mm und 2 mm beträgt.

9. Befestigungselement (100) nach einem der vorhergehenden Ansprüche, wobei eine Länge des Schafts (2) von einem dem Befestigungskopf (1) zugewandten Ende bis zur Spitze (3) zwischen 10 mm und 25 mm beträgt.

10. Befestigungselement (100) nach einem der vorhergehenden Ansprüche, welches Stahl, Aluminium, faserverstärkten Kunststoff oder eine Kombination davon enthält.

11. Befestigungselement (100) nach einem der vorhergehenden Ansprüche wobei die Aufnahme des Drehmoments des Befestigungskopfes (1) als Innensechsrund (11) ausgebildet ist.

12. Befestigungselement (100) nach einem der vorhergehenden Ansprüche, wobei ein Durchmesser des Befestigungskopfs (1) grösser ist als der Aussendurchmesser (D) des Aussengewindes (4).

13. Verwendung des Befestigungselements (100) nach einem der vorhergehenden Ansprüche zum Eindrehen in das poröse Material.

14. Verwendung nach Anspruch 13 wobei das poröse Material Balsaholz, geschäumter Kunststoff oder Aluminiumschaum ist.

15. Verwendung nach Anspruch 13 wobei das poröse Material eine Dichte ρ von ρ < 1g/cm³ hat.
